# EUROPEAN PATENT SPECIFICATION

(11) **EP 1 682 613 B1**
(45) Date of publication and mention of the grant of the patent: **15.08.2012**
(21) Application number: 04794855.9
(22) Date of filing: 12.10.2004
(51) Int. Cl.: C08L 23/04, C08L 23/08

(54) **MELT PROCESSABLE COMPOSITIONS**
AUS DER SCHMELZE VERARBEITBARE ZUSAMMENSETZUNGEN
COMPOSITIONS POUVANT ETRE TRAITEES PAR FUSION

(30) Priority: 06.11.2003 US 702342
(43) Date of publication of application: 26.07.2006
(73) Proprietor: 3M Innovative Properties Company, St. Paul, MN 55133-3427 (US)
(72) Inventor: BRIERS, Joris 3M Center, Saint Paul, Minnesota 55133-3427 (US); CERNOHOUS, Jeffrey J. 3M Center, Saint Paul, Minnesota 55133-3427 (US); NUYTTENS, Rik R. 3M Center, Saint Paul, Minnesota 55133-3427 (US)
(74) Representative: Vossius & Partner
(86) International application number: PCT/US2004/033607
(87) International publication number: WO 2005/047386

(56) References cited:
- WO-A-00/69972
- WO-A-02/066544
- US-A- 5 550 193
- US-B1- 6 294 604

## Description

The present invention relates to compositions for improving the melt processing of polymeric materials, and more particularly to a specific fluoropolymer processing aid suitable for improving the processing of melt processable thermoplastic hydrocarbon polymers.

Fluoropolymers are often utilized as processing aids in the melt processing of polymeric materials, such as polyolefins. The polymeric materials possess certain viscoelastic characteristics that, when melt processed, may result in undesirable defects in the finished material This is particularly evident in extrusion processes for a given extrudable polymer where there exists a critical shear rate above which the surface of the extrudate exhibits melt defects. The melt defects may be present as a rough surface on the extrudate, commonly referred to as melt fracture. Melt fracture is primarily a function of the rheology of the polymer and the temperature and speed at which the polymer is processed. Melt fracture may take the form of "sharkskin", a loss of surface gloss, that in more serious manifestations appears as ridges running more or less transverse to the extrusion direction. The extrudate may, in more severe cases, undergo "continuous melt fracture" where the surface becomes grossly distorted.

Fluoropolymers are capable of alleviating melt fracture in many polymeric materials. The fluoropolymers are incorporated into the polymeric materials in an amount generally of about 2% by weight or less. Certain additives may also be employed to assist the fluoropolymer in clearing melt fracture. Conventionally recognized additives are typically combined with the fluoropolymer to reduce the total amount of expensive fluoropolymer generally required to clear melt fracture in specific processing systems.

The specific amount of fluoropolymer required to clear melt fracture, as well as the time necessary to clear melt fracture, may vary depending on the polyolefin, the type of fluoropolymer, process equipment, and the process conditions. The industry involving the processing of polyolefins is continuously seeking improved fluorolymers to impart efficiencies through their respective processes.

US-A-5550193 discloses a blend of LLDPE, fluoropolymer and a master batch containing polyethylene glycol of MW 5000)

US-A-6294604 discloses compositions of polyethylene and processing aid of a vinylidene fluoride and hexfluoropropene copolymer and polyethylene glycol WO-A-00/69972 discloses fluoropolymer processing aids in different matrix polymers US-A-5015693 discloses processing aids with a content of polyethylene glycol and fluoropolymer

The present invention is directed to
a fluoropolymer processing aid having
   (i) poly(oxyalkylene) polymer; and
   (ii) a fluoropolymer having interpolymerized units of vinylidene fluoride and perfluoropropylene wherein the vinylidene fluoride content of the fluoropolymer is greater than 85% by weight; and
   wherein said fluoropolymer processing aid has a poly(oxyalkylene) polymer to fluoropolymer ratio of 1: (1 or greater);
and wherein said melt processable composition upon extrusion achieves an extrudate exhibiting no melt defects at a lower level of said fluoropolymer processing aid when compared to a standard processing aid system, wherein "a Standard Processing Aid System" means the same components, specifically thermoplastic hydrocarbon polymer and poly(oxyalkylene) polymer, with a fluoropolymer of 60% by weight of vinylidene fluoride and 40% by weight of hexafluoropropylene and having a mooney viscosity (ML 1 + 10, 121 °C, ASTM DI646) of 36 under similar testing methods, equipment and conditions.

The present invention is directed to a fluoropolymer processing aid that is more efficient than conventional processing aids in eliminating melt processing problems associated with the melt processing of thermoplastic hydrocarbon polymers. In one aspect, the invention is a fluoropolymer processing aid that includes a poly(oxyalkylene) polymer and a fluoropolymer. The fluoroplymer has interpolymerized units of vinylidene fluoride and at least one other monomer wherein the vinylidene fluoride content of the fluoropolymer is greater than 85% by weight. The fluoropolymer processing aid, when blended with a thermoplastic hydrocarbon polymer to form a melt processable composition, achieves an extrudate exhibiting no melt defects at a lower level of fluoropolymer processing aid when compared to a standard processing aid system. In this embodiment, the content of fluoropolymer processing aid in the melt processable composition is 200 ppm or less.

In another aspect of the invention, the fluoropolymer processing aid is blended with a thermoplastic hydrocarbon polymer to form a melt processable composition. The fluoropolymer in the fluoropolymer processing aid is a thermoplastic copolymer having interpolymerized units of vinylidene fluoride and at least one other monomer, wherein the vinylidene fluoride content of the fluoropolymer is greater than 85% by weight. This embodiment, when combined in a melt processable composition, upon extrusion achieves an extrudate exhibiting no melt defects. In such a melt processable composition, the content of fluoropolymer preferably is less than 400 ppm

The melt processable compositions of the present invention may be utilized to make items such as film, sheet, pipe, wire or cable.

For purposes of the present invention, the following terms used in this application are defined as follows:
"Polymer processing aid" means a thermoplastic or elastomeric fluoropolymer that is capable of improving polymer processing , for example, reducing melt fracture.
"Melt processable composition" means compositions or materials that are capable of withstanding processing conditions at temperatures near the melting point of at least one composition in a mixture.
"A Standard Processing Aid System" means the same components, specifically thermoplastic hydrocarbon polymer, poly(oxyalkylene) polymer, with a fluoropolymer of 60% by weight of vinylidene fluoride and 40% by weight of hexafluoropropylene and having a mooney viscosity (ML 1 + 10, 121 °C, ASTM DI646) of 36 under similar testing methods, equipment and conditions.
"Melt defects" means defects embodied in the extrudate that are generated during processing the melt processable compositions, for example melt defects may include melt fracture, die build up, chemical gel formation, or physical gel formation.

The compositions of the present invention reduce the melt defects encountered when melt processing polymeric materials. For purposes of the invention, melt processable polymeric materials or compositions are those that are capable of being processed while at least a portion of the composition is in a molten state. Conventionally recognized melt processing methods and equipment may be employed in processing the compositions of the present invention. Non-limiting examples of melt processing practices include extrusion, injection molding, batch mixing, and rotomolding. A preferred application of the present invention involves cast or blown film extrusion.

Melt processable compositons generally include one or more melt processable thermoplastic hydrocarbon polymers and a fluoropolymer processing aid. For purposes of the present invention, the fluoropolymer processing aid includes a fluoropolymer component and a poly(oxyalkylene) polymer.

The thermoplastic hydrocarbon polymers to which the fluoropolymer processing aid is added include conventional melt processable polymers. Most preferred are those thermoplastic hydrocarbon polymers obtained by the homopolymerization or copolymerization of olefins, as well as copolymers of one or more olefins and one or more monomers which are copolymerizable with such olefins, e.g. vinyl ester compounds such as vinyl acetate.

The preferred olefins have the general structure CH₂ =CHR, where R is a hydrogen or an alkyl radical, and generally, the alkyl radical contains not more than 10 carbon atoms and preferably one to four carbon atoms. Representative olefins meeting the noted structure are fully disclosed in U.S. Patent No. 4,855,360.

Preferred thermoplastic hydrocarbon polymers include polyolefins (high density polyethylene (HDPE), low density polyethylene (LDPE), linear low density polyethylene (LLDPE), polypropylene (PP), polyolefin copolymers (e.g., ethylene-butene, ethylene-octene, ethylene vinyl alcohol), or combinations thereof. Most preferred are the polyolefins.

The thermoplastic hydrocarbon polymer is generally included in the melt processable compositions in amounts of about typically greater than about 30% by weight. Those skilled in the art recognize that the amount of polymeric binder will vary depending upon, for example, the type of polymer, the processing equipment, processing conditions and the desired end product. The thermoplastic hydrocarbon polymers may be used in the form of powders, pellets, granules, or any other extrudable form.

The fluoropolymer of the fluoropolymer processing aid useful in this invention are copolymers of vinylidene fluoride and at least one additional monomer, wherein the vinylidene fluoride content is at least 85%. At the most preferred level of vinylidene fluoride, the resulting fluoropolymer is generally considered a thermoplastic polymer.

Non-limiting examples of monomers that may be combined with vinylidene fluoride to produce the fluoropolymer employed in the present invention include other fluorinated polymers, such as hexafluoropropylene, or non-fluorinated polymers, such as propylene. Preferred comonomers with vinylidene fluoride are perfluoropropylene, tetrafluoroethylene, chlorotrifluoroethylene, and pentafluoropropylene. Particularly preferred are the fluorinated polymers produced by copolymerizing perfluoropropylene and vinylidene fluoride, as described in U.S. Pat. Nos. 3,051,677 (Rexford) and 3,318,854 (Honn, et al.) and those polymers produced by copolymerizing perfluoropropylene, vinylidene fluoride and tetrafluoroethylene as described in U.S. Pat. No. 2,968,649 (Pailthorp et al.). The elastomeric copolymers of perfluoropropylene and vinylidene fluoride having between about 15 and about 50 mole percent perfluoropropylene, optionally with the addition of up to 5 to 30 mole percent tetrafluoroethylene, are particularly useful. The amount of fluoropolymer in the fluoropolymer processing aid is generally about 400 ppm or less and preferably about 200 ppm or less.

For purposes of the invention, conventionally recognized poly(oxyalkylene) polymers may be utilized to form a component of the fluoropolymer processing aid. Poly(oxyalkylene) polymers include poly(oxyalkylene) polyols and their derivatives. U.S. Patent Nos. 4,855.360 and 5,830,947, disclose various types of poly(oxyalkylene) polymers that may be suitable for use with the fluoropolymer processing aid employed in the present invention. Another examples of poly(oxyalkylene) polyols useful in this invention include those sold under the trademark Carbowax, such as Carbowax 8000 from Dow Chemical Company, Midland, MI. The amount of poly(oxyalkylene) polymer in the fluoropolymer composition is generally added to the composition to achieve a poly(oxyalkylene) polymer to fluoropolymer ratio of 1:1 or greater.

It is generally recognized by those skilled in the art of polyolefin processing that other conventional additives may be optionally employed in melt processing application. Non-limiting examples of such additives include light stabilizers, antioxidants, antiblocking agents, slip agents, lubricants, fillers, flame retardants, foaming agents, nucleating agents, clarifying agents, colorants, coupling agents, compatibilizers, antistatic agents, antifogging agents, heat stabilizers, plasticizers, reinforcing agents, metal scavengers, acid/base scavengers, biocides or combinations thereof.

The amount of fluoropolymer processing aid present in the melt processable composition is dependent upon several variables, such as for example, the thermoplastic hydrocarbon polymer, the type of melt processing equipment, the processing conditions, and others. Those of skill in the art are capable of selecting an appropriate fluoropolymer processing aid to assist in the processing of desired thermoplastic hydrocarbon polymers. In a preferred embodiment, the fluoropolymer processing aid is used at 0.005 to 2.0% by weight of the composite. More preferably, the polymer processing aid level is between 0.01 and 0.05% and even more preferably between 0.02 and 0.2% by weight.

The melt processable composition of the invention can be prepared by any of a variety of ways. The addition of fluorocarbon polymer, poly(oxyalkylene) polymer, and other optional components to the thermoplastic hydrocarbon polymer can be accomplished by any of the means conveniently employed to add adjuvants to polymers. Thus the fluoropolymer and poly(oxyalkylene) polymer can be added to the hydrocarbon polymer in a Banbury mixer, or a mixing extruder. Generally, the mixing operation is carried out at a temperature above the melting point of the polymer to provide uniform distribution of the fluorocarbon polymer and poly(oxyalkylene) polymer throughout the thermoplastic hydrocarbon polymer. The fluorocarbon polymer and the poly(oxyalkylene) polymer can each be individually coated from solution onto the thermoplastic hydrocarbon polymer resin to create masterbatches of coated resin which are then dry blended with an appropriate quantity of the uncoated hydrocarbon resin to achieve the desired concentrations of fluorocarbon polymer and poly(oxyalkylene) polymer in the extrudable composition. The fluoropolymer processing additive and the host polymer may be used in the form, for example, of a powder, a pellet, or a granular product

The resulting melt processable composition can be either extruded directly into the form of the final product shape or pelletized or otherwise comminuted into a desired particulate size or size distribution and fed to an extruder, which typically will be a single-screw extruder, that melt-processes the blended mixture to form the final product shape.

Melt-processing typically is performed at a temperature from 180° to 280° C, although optimum operating temperatures are selected depending upon the melting point, melt viscosity, and thermal stability of the blend. Different types of melt processing equipment, such as extruders, may be used to process the melt processable compositions of this invention. Extruders suitable for use with the present invention are described, for example, by Rauwendaal, C., "Polymer Extrusio, "Hansen Publishers, p. 23-48, 1986. The die design of an extruder can vary, depending on the desired extrudate to be fabricated. For example, an annular die can be used to extrude tubing, useful in making fuel line hose, such as that described in U.S. Pat No. 5,284,184 (Noone et al.).

The present invention reduces the amount of fluoropolymer processing aid required to clear melt defects when compared to a standard processing aid system. For purposes of the invention, a standard processing aid system is recognized as containing the same components, the same specifically thermoplastic hydrocarbon polymer, the same poly(oxyalkylene) polymer, with a fluoropolymer of 60% by weight ofvinylidene fluoride and 40% by weight of hexafluoropropylene under the similar testing methods, equipment and conditions. The present invention achieves this significant improvement over conventionally recognized fluoropolymer processing aids. For example, the present invention, as further demonstrated in the Examples section, may clear melt defects utilizing less than 50% of the conventional fluoropolymer processing aids presently employed by industry. The present invention may preferably clear melt defects at levels of less than 200 ppm of fluoropolymer processing aid in the melt processable composition.

Although, reduction of melt defects is one mechanism to determine overall performance of the fluoropolymer processing aid, those skilled in the art understand that other processing attributes, such as for example, melt pressure, melt temperature, and mass flow rate may be positively affected through utilization of the present invention.

It is known in the art that a potential problem when adding fluoropolymer processing aid to polyolefins is physical and chemical gel formation. In either case, a polyolefin film having gels present can have reduced physical properties and be visually unacceptable for the product application. Therefore, it is highly desirable for a fluoropolymer processing aid to not cause gels during processing. Physical gel formation results from using a fluoropolymer processing aid that is difficult to disperse in the polyolefin system. As a result, poorly dispersed fluoropolymer particles or gels can result. Chemical gel formation can also occur if the fluoropolymer processing aid used is thermally unstable or chemically reactive with the polyolefin resin. This can cause deleterious effects on the polyolefin resin (e.g., crosslinking) that result in chemically gelled particles being present. In either case, the presence of gelled material is unacceptable in the final extruded article (e.g. film). The fluoropolymer processing aid is capable of providing the desired performance level while exhibiting no gel formation.

The invention is further illustrated in the following examples.

### Examples

Materials Used

| **Material** | **Description** |
|---|---|
| Polyolefin 1 | Exxon NTX-095, a linear low density polyethylene, commercially available from ExxonMobil, Houston, TX |
| Polyolefin 2 | Exxon 1001.32, a linear low density polyethylene, commercially available from ExxonMobil, Houston, TX |
| Polyolefin 3 | Exxon 1018 , a linear low density polyethylene, commercially available from ExxonMobil, Houston, TX |
| Polyolefin 4 | Nova Surpass, a linear low density polyethylene, commercially available from Nova Chemicals, Calgary, Alberta Canada |
| Polyolefin 5 | Exxon LV1201, a linear low density polyethylene, commercially available from ExxonMobil, Machelen, Belgium |
| Antiblock | Ampacet 10090, a 60 % concentrate commercially available Ampacet Corporation, Tarrytown, NY. |
| Slip | Ampacet 101558, a 5 % concentrate commercially available from Ampacet Corporation, Tarrytown, NY. |
| Slip/Antiblock Concentrate | FSU 105E, a combined slip/antiblock concentrate commercially available from A. Schulman Europe, Würselen, Germany |
| PEG | Carbowax 8000. A polyethylene glycol, commercially available from Dow Chemical Co., Midland, MI. |
| FX-5920A | Dynamar FX-5920A, a fluoropolymer based processing aid, commercially available from Dyneon LLC, Oakdale, MN. |
| PPA 1 | Dyneon 11012, a fluoropolymer, commercially available from Dyneon LLC, Oakdale, MN. |
| PPA 1A | An experimental PPA containing Dyneon 11012, a fluoropolymer, commercially available from Dyneon LLC, Oakdale, MN and PEG (Carbowax 8000). |
| PPA 2 | Dyneon 31508, a fluoropolymer, commercially available from Dyneon LLC, Oakdale, MN. |
| PPA 2A | An experimental PPA containing Dyneon 31508, a fluoropolymer, commercially available from Dyneon LLC, Oakdale, MN and PEG (Carbowax 8000). |
| PPA3 | Dyneon 1015, a fluoropolymer, commercially available from Dyneon LLC, Oakdale, MN. |
| PPA 3A | An experimental PPA containing Dyneon 1015, a fluoropolymer, commercially available from Dyneon LLC, Oakdale, MN and PEG (Carbowax 8000). |

### Test for Determining % Melt Fracture in Polymer Films

Blown film samples were collected at 10 minute intervals during the extrusion trial. Samples were laid flat and opened along one edge with a razor blade. The sample was then placed on an overhead projector to facilitate the visual identification of the areas of the film containing melt defects. Along a line drawn on the film sample perpendicular to the direction of the film extrusion, the widths of areas containing film defects were measured. The sum of the widths containing defects divided by the total width of the film sample gave the percent melt defects or melt fracture.

### PPA Identification

The chemical compositions of the PPA formulations screened in this work are given in Table 1. These materials contained a fluoropolymer, and in some cases a poly(oxyalkylene) polymer, namely Carbowax 8000.

**Table 1. Identification of PPAs Examined**

| **Example** | **VDF (wt %)** | **HFP (wt %)** | **CTFE (wt%)** | **Fluoropolymer/PEG Ratio** |
|---|---|---|---|---|
| Dynamar FX-5920A | 60 | 40 | 0 | 2/1 |
| PPA 1 | 90 | 10 | 0 | 100/0 |
| PPA 1A | 90 | 10 | 0 | 2/1 |
| PPA 2 | 85 | 0 | 15 | 100/0 |
| PPA 2A | 85 | 0 | 15 | 2/1 |
| PPA 3 | 100 | 0 | 0 | 100/0 |
| PPA 3A | 100 | 0 | 0 | 2/1 |

### Comparative Example 1. Melt Fracture Elimination Performance of FX 5910A

In Comparative Example 1 a 3 % concentrate of FX-5920A in Polyolefin 1 was first made using the following procedure. Specifically, 204.3 g of Dynamar FX-5920A was dry blended with 6.61 Kg of Polyolefin 1. The blend was compounded using a a 19 mm, 15:1 L:D, Haake Rheocord Twin Screw Extruder (commercially available from Haake Inc., Newington, NH) equipped with a conical counter-rotating screw and a Accurate open helix dry material feeder (commercially available from Accurate Co. Whitewater, WI). The extrusion parameters were controlled and experimental data recorded using a Haake RC 9000 control data computerized software (commercially available for Haake Inc., Newington, NH). The material was fed into the extruder at a rate of 50 g/min and was processed using the following temperature profile in each respective zone: 165 °C /190 °C /200 °C. The die was also kept at 200 °C throughout the experiment Processing parameters (i.e., melt pressure, torque) were recorded throughout the experiment. Materials were extruded through a standard 1/8" diameter, 4-strand die (commercially available from Haake Inc., Newington, NH), water quenched, and pelletized. The sample was then re-extruded and pelletized under identical conditions to insure good PPA dispersion in the concentrate.

Films were produced using a Keifel blown film line with a 40 mm, 24/1 :L/D, grooved feed extruder. The die was of spiral design, with a diameter of 40 mm and a die gap of 1.25 mm. An adjustable single lip air ring with chilled air was used for cooling. An iris and sizing cage provided further bubble stability. Film was produced with a nominal gauge of 50 microns.

The Kiefel extruder and dies zones were set at 135, 190, 220, and 210 °C respectively to maintain a melt temperature of approximately 210 °C. The screw was maintained at about 50 rpm to deliver an output of 18.2 kg/hour corresponding to a shear rate of 220 s⁻¹.

Prior to each evaluation it was necessary to ensure that the blown film line was free of residual fluoropolymer from the previous evaluation. This was accomplished by extruding approximately 9 kg of a filled polyolefin concentrate (e.g., a 70 % CaCO₃ masterbatch, #HM-10, Heritage Plastics). The base resin, polyolefin 1, was then extruded for 30 minutes to insure that equilibrium processing conditions had been achieved and that the resultant film was fully melt fractured.

Samples for extrusion were prepared by weighing the required amount of fluoropolymer concentrate, pelletized resin. Comparative Example 1 was then analyzed using a minimum level protocol. In this method, the PPA level in the system was incrementally increased in a regular fashion every 60 minutes until all melt fracture is eliminated from the resultant film. In Comparative Example 1, the experiment was initially started 200 ppm of FX-5920A and incrementally increased by 200 ppm every 60 minutes until melt fracture was eliminated from the system. The level of melt fracture was analyzed as described using the aforementioned protocol. Samples were also visually analyzed for the presence of gels.

### Comparative Example 2. Melt Fracture Elimination Performance of FX-5920A

Comparative Example 2 was performed in an identical fashion to Comparative Example 1 with the following exceptions. Polyolefin 2 was utilized in place of Polyolefin 1. About 1500 ppm slip and 7500 ppm antiblock were added to the formulation. The blown film die gap was changed to 0.6 mm. The film produced with a nominal gauge of 25 microns. The extruder and dies zones were set at 210, 230, 235, and 230°C respectively to maintain a melt temperature of approximately 2150 °C. The screw was maintained at about 30 rpm to deliver an output of 11.8 kg/hour corresponding to a shear rate of 520 s⁻¹.

### Comparative Example 3. Melt Fracture Elimination Performance of FX-5920A

Comparative Example 3 was performed in an identical fashion to Comparative Example 1 with the following exceptions. Polyolefin 3 was utilized in place of Polyolefin 1 and 1500 ppm slip and 7500 ppm antiblock were added to the formulation.

### Comparative Example 4. Melt Fracture Elimination Performance of FX-5920A

Comparative Example 4 was performed in an identical fashion to Comparative Example 1 with the following exceptions. Polyolefin 4 was utilized in place of Polyolefin 1. About 1500 ppm slip and 7500 ppm antiblock were added to the formulation. The blown film die gap was changed to 0.6 mm. The film produced with a nominal gauge of 25 microns. The extruder and dies zones were set at 205, 215, 235, and 210 °C respectively to maintain a melt temperature of approximately 210 °C. The screw was maintained at about 15 rpm to deliver an output of 6.8 kg/hour corresponding to a shear rate of 300 s⁻¹.

### Comparative Example 5. Melt Fracture Elimination Performance of PPA 1

Comparative Example 5 was performed in an identical fashion to Comparative Example 3 with the exception that PPA 1 was utilized in place of FX-5920A.

### Comparative Example 6. Melt Fracture Elimination Performance of FX-5920A

Comparative Example 6 was performed in an identical fashion to Comparative Example 1 with the following exceptions. Polyolefin 5 was utilized in place of Polyolefin 1. To the formulation was added 2 % of a commercial slip/antiblock combined concentrate (commercially available from A. Schulman). A lab scale Collin blown film line was utilized having a 45 mm extruder, 25/1:L/D, and dual lip air ring. The blown film die gap was changed to 0.6 mm. The film produced with a nominal gauge of 25 microns. The extruder and dies zones were set at 205, 205, 210, 220 and 205 °C respectively to maintain a melt temperature of approximately 210 °C. The screw was maintained at about 46 rpm to deliver an output of 11.0 kg/hour corresponding to a shear rate of 430 s⁻¹.

### Comparative Example 7. Melt Fracture Elimination Performance of PPA 3.

Comparative Example 7 was performed in an identical fashion to Comparative Example 3 with the exception that PPA 3 was utilized in place of FX-5920A.

### Comparative Example 8. Melt Fracture Elimination Performance of PPA 3A.

Comparative Example 8 was performed in an identical fashion to Comparative Example 3 with the exception that PPA 3A was utilized in place of FX-5920A.

### Example 1. Melt Fracture Elimination Performance of PPA 1A

Example 1 was performed in an identical fashion to Comparative Example 1 with the exception that PPA 1A was utilized in place of FX-5920A.

### Example 2. Melt Fracture Elimination Performance of PPA 1A

Example 2 was performed in an identical fashion to Comparative Example 2 with the exception that PPA 1A was utilized in place of FX-5920A.

### Example 3. Melt Fracture Elimination Performance of PPA 1A

Example 3 was performed in an identical fashion to Comparative Example 3 with the exception that PPA 1A was utilized in place of FX-5920A.

### Example 4. Melt Fracture Elimination Performance of PPA 1A

Example 4 was performed in an identical fashion to Comparative Example 4 with the exception that PPA 1A was utilized in place of FX-5920A.

### Example 5. Melt Fracture Elimination Performance of PPA 1A

Example 5 was performed in an identical fashion to Comparative Example 6 with the exception that PPA 1A was utilized in place of FX-5920A.

**Table 2. Overall PPA Level Required to Eliminate Melt Fracture for Comparative Examples 1-5 and Examples 1-4.**

| **Example** | **PPA** | **Resin Host** | **PPA Level Required to Clear Melt Fracture (PPM)** | **Gel Present** |
|---|---|---|---|---|
| CE 1 | FX-5920A | Polyolefin 1 | 1600 | No |
| CE 2 | FX-5920A | Polyolefin 2 | 1000 | No |
| CE 3 | FX-5920A | Polyolefin 3 | 1600 | No |
| CE 4 | FX-5920A | Polyolefin 4 | 800 | No |
| CE 5 | PPA1 | Polyolefin 3 | >1000 | No |
| CE 6 | FX-5920A | Polyolefin 5 | 800 | No |
| CE 7 | PPA 3 | Polyolefin 4 | 400 | Yes |
| CE 8 | PPA 3A | Polyolefin 4 | 400 | Yes |
| Ex 1 | PPA 1A | Polyolefin 1 | 700 | No |
| Ex 2 | PPA 1A | Polyolefin 2 | 400 | No |
| Ex 3 | PPA 1A | Polyolefin 3 | 400 | No |
| Ex 4 | PPA 1A | Polyolefin 4 | 400 | No |
| Ex 5 | PPA 1A | Polyolefin 5 | 400 | No |

Table 2 demonstrates that when compared to a standard fluoropolymer processing additive (FX-5920A) in a wide variety of host resins (CE 1-5) and to a high VDF copolymer that does not contain PEG (PPA 1), a greatly reduced amount of high VDF copolymers that contain PEG (PPA 1A) is required to eliminate melt fracture in the films produced. Additionally, Table 2 shows that VDF homopolymers with and without PEG (PPA 3 and 3A) suffer from the presence of gels in the resultant film whereas, the standard fluoropolymer processing additive (FX-5920A), PPA 1 and PPA 1A do not

### Comparative Example 9. Melt Fracture Elimination Performance of FX-5920A

Comparative Example 9 was performed in an identical fashion to Comparative Example 3 with the following exceptions. PPA 2 was utilized in place of FX-5920A.

### Reference Example 6. Melt Fracture Elimination Performance of FX-5920A

Reference Example 6 was performed in an identical fashion to Comparative Example 9 with the following exceptions. PPA 2A was utilized in place of PPA 2.

**Table 3. Overall PPA Level Required to Eliminate Melt Fracture for Comparative Example 9 and Reference Example 6.**

| **Example** | **PPA** | **Resin Host** | **PPA Level Required to Clear Melt Fracture (PPM)** | **Gels Present** |
|---|---|---|---|---|
| CE 9 | PPA 2 | Polyolefin 3 | >1600 | No |
| Ex 6 | PPA 2A | Polyolefin 3 | 1200 | No |

From the above disclosure of the general principles of the present invention and the preceding detailed description, those skilled in this art will readily comprehend the various modifications to which the present invention is susceptible. Therefore, the scope of the invention should be limited only by the following claims.

## Claims

1. A melt processable composition comprising:
(a) one or more thermoplastic hydrocarbon polymers;
(b) a fluoropolymer processing aid having
(i) poly(oxyalkylene) polymer; and
(ii) a fluoropolymer having interpolymerized units of vinylidene fluoride and perfluoropropylene wherein the vinylidene fluoride content of the fluoropolymer is greater than 85% by weight; and
wherein said fluoropolymer processing aid has a poly(oxyalkylene) polymer to fluoropolymer ratio of 1: (1 or greater);
and wherein said melt processable composition upon extrusion achieves an extrudate exhibiting no melt defects at a lower level of said fluoropolymer processing aid when compared to a standard processing aid system, wherein "a Standard Processing Aid System" means the same components, specifically thermoplastic hydrocarbon polymer and poly(oxyalkylene) polymer, with a fluoropolymer of 60% by weight of vinylidene fluoride and 40% by weight of hexafluoropropylene and having a mooney viscosity (ML 1 + 10, 121 °C, ASTM DI646) of 36 under similar testing methods, equipment and conditions.

2. The composition as recited in claim 1, wherein said melt processable composition has a fluoropolymer content of 400 ppm or less.

3. The composition as recited in claim 1 or 2, further comprising light stabilizers, antioxidants, antiblocking agents, slip agents, lubricants, fillers, flame retardants, foaming agents, nucleating agents, clarifying agents, colorants, coupling agents, compatibilizers, antistatic agents, antifogging agents, heat stabilizers, plasticizers, reinforcing agents, metal scavengers, acid/base scavengers, biocides or combinations thereof.

4. The composition as recited in any of claims 1 to 3, wherein the fluoropolymer is a thermoplastic polymer.

5. A melt processable composition comprising:
(a) one or more thermoplastic hydrocarbon polymers;
(b) a fluoropolymer processing aid having
(i) poly(oxyalkylene) polymer; and
(ii) a fluoropolymer having interpolymerized units of vinylidene fluoride and perfluoropropylene wherein the vinylidene fluoride content of the fluoropolymer is greater than 85% by weight and the amount of fluoropolymer in the melt processable composition is less than 200 ppm; and
wherein said fluoropolymer processing aid has a poly(oxyalkylene) polymer to fluoropolymer ratio of 1: (1 or greater).

6. The composition as recited in claim 5, further comprising light stabilizers, antioxidants, antiblocking agents, slip agents, lubricants, fillers, flame retardants, foaming agents, nucleating agents, clarifying agents, colorants, coupling agents, compatibilizers, antistatic agents, antifogging agents, heat stabilizers, plasticizers; reinforcing agents, metal scavengers, acid/base scavengers, biocides or combinations thereof.

7. The composition as recited in claim 5 or 6, wherein the fluoropolymer is a thermoplastic polymer.

8. A fluoropolymer processing aid comprising:
(a) poly(oxyalkylene) polymer; and
(b) a fluoropolymer having interpolymerized units of vinylidene fluoride and perfluoropropylene wherein the vinylidene fluoride content of the fluoropolymer is greater than 85% by weight; and
wherein said fluoropolymer processing aid has a poly(oxyalkylene) polymer to fluoropolymer ratio of 1: (1 or greater);
and wherein fluoropolymer processing aid when added to a melt processable composition, achieves an extrudate exhibiting no melt defects at a lower level of fluoropolymer processing aid when compared to a standard processing aid system, wherein "a Standard Processing Aid System" means the same components, specifically thermoplastic hydrocarbon polymer and poly(oxyalkylene) polymer, with a fluoropolymer of 60% by weight of vinylidene fluoride and 40% by weight of hexafluoropropylene and having a mooney viscosity (ML 1 + 10, 121°C, ASTM DI646) of 36 under similar testing methods, equipment and conditions.

9. The composition as recited in claim 8, wherein the fluoropolymer is a a thermoplastic copolymer.

## Patentansprüche

1. Aus der Schmelze verarbeitbare Zusammensetzung, umfassend:
(a) ein oder mehrere thermoplastische Kohlenwasserstoffpolymere;
(b) ein Fluorpolymer-Verarbeitungshilfsmittel mit
(i) Poly(oxyalkylen)polymer und
(ii) einem Fluorpolymer mit mischpolymerisierten Einheiten von Vinylidenfluorid und Perfluorpropylen, wobei der Vinylidenfluoridgehalt des Fluorpolymers mehr als 85 Gew.-% beträgt; und
wobei das Fluorpolymer-Verarbeitungshilfsmittel ein Verhältnis von Poly(oxyalkylen)polymer zu Fluorpolymer von 1:(1 oder mehr) aufweist;
und wobei die aus der Schmelze verarbeitbare Zusammensetzung nach Extrusion ein Extrudat ergibt, das bei einem niedrigeren Niveau des Fluorpolymer-Verarbeitungshilfsmittels im Vergleich zu einem standardmäßigen Verarbeitungshilfsmittelsystem keine Schmelzedefekte aufweist, wobei ein "standardmäßiges Verarbeitungshilfsmittelsystem" die gleichen Komponenten, im Einzelnen thermoplastisches Kohlenwasserstoffpolymer und Poly(oxyalkylen)polymer, mit einem Fluorpolymer aus 60 Gew.-% Vinylidenfluorid und 40 Gew.-% Hexafluorpropylen und mit einer Mooney-Viskosität (ML 1 + 10, 121°C, ASTM DI646) von 36 unter ähnlichen Prüfmethoden, -einrichtungen und -bedingungen bedeutet.

2. Zusammensetzung nach Anspruch 1, wobei die aus der Schmelze verarbeitbare Zusammensetzung einen Fluorpolymergehalt von 400 ppm oder weniger aufweist.

3. Zusammensetzung nach Anspruch 1 oder 2, ferner umfassend Lichtschutzmittel, Antioxidantien, Antiblockmittel, Gleitmittel, Schmiermittel, Füllstoffe, Flammschutzmittel, Treibmittel, Nukleierungsmittel, Klärungsmittel, Farbmittel, Kupplungsmittel, Verträglichkeitsvermittler, Antistatika, Antischleiermittel, Wärmestabilisatoren, Weichmacher, Verstärkungsmittel, Metallfänger, Säure/Base-Fänger, Biozide oder Kombinationen davon.

4. Zusammensetzung nach einem der Ansprüche 1 bis 3, wobei es sich bei dem Fluorpolymer um ein thermoplastisches Polymer handelt.

5. Aus der Schmelze verarbeitbare Zusammensetzung, umfassend:
(a) ein oder mehrere thermoplastische Kohlenwasserstoffpolymere;
(b) ein Fluorpolymer-Verarbeitungshilfsmittel mit
(i) Poly(oxyalkylen)polymer und
(ii) einem Fluorpolymer mit mischpolymerisierten Einheiten von Vinylidenfluorid und Perfluorproplyen, wobei der Vinylidenfluoridgehalt des Fluorpolymers mehr als 85 Gew.-% beträgt; und die Fluorpolymermenge in der aus der Schmelze verarbeitbaren Zusammensetzung 200 ppm beträgt; und
wobei das Fluorpolymer-Verarbeitungshilfsmittel ein Verhältnis von Poly(oxyalkylen)polymer zu Fluorpolymer von 1:(1 oder mehr) aufweist.

6. Zusammensetzung nach Anspruch 5, ferner umfassend Lichtschutzmittel, Antioxidantien, Antiblockmittel, Gleitmittel, Schmiermittel, Füllstoffe, Flammschutzmittel, Treibmittel, Nukleierungsmittel, Klärungsmittel, Farbmittel, Kupplungsmittel, Verträglichkeitsvermittler, Antistatika, Antischleiermittel, Wärmestabilisatoren, Weichmacher, Verstärkungsmittel, Metallfänger, Säure/Base-Fänger, Biozide oder Kombinationen davon.

7. Zusammensetzung nach Anspruch 5 oder 6, wobei es sich bei dem Fluorpolymer um ein thermoplastisches Polymer handelt.

8. Fluorpolymer-Verarbeitungshilfsmittel, umfassend:
(a) Poly(oxyalkylen)polymer und
(b) ein Fluorpolymer mit mischpolymerisierten Einheiten von Vinylidenfluorid und Perfluorproplyen, wobei der Vinylidenfluoridgehalt des Fluorpolymers mehr als 85 Gew.-% beträgt; und
wobei das Fluorpolymer-Verarbeitungshilfsmittel ein Verhältnis von Poly(oxyalkylen)polymer zu Fluorpolymer von 1:(1 oder mehr) aufweist; und wobei das Fluorpolymer-Verarbeitungshilfsmittel bei Zugabe zu einer aus der Schmelze verarbeitbaren Zusammensetzung ein Extrudat ergibt, das bei einem niedrigeren Niveau des Fluorpolymer-Verarbeitungshilfsmittels im Vergleich zu einem standardmäßigen Verarbeitungshilfsmittelsystem keine Schmelzedefekte aufweist, wobei ein "standardmäßiges Verarbeitungshilfsmittelsystem" die gleichen Komponenten, im Einzelnen thermoplastisches Kohlenwasserstoffpolymer und Poly(oxyalkylen)-polymer, mit einem Fluorpolymer aus 60 Gew.-% Vinylidenfluorid und 40 Gew.-% Hexafluorpropylen und mit einer Mooney-Viskosität (ML 1+10, 121°C, ASTM DI646) von 36 unter ähnlichen Prüfmethoden, -einrichtungen und -bedingungen bedeutet.

9. Zusammensetzung nach Anspruch 8, wobei es sich bei dem Fluorpolymer um ein thermoplastisches Copolymer handelt.

## Revendications

1. Composition pouvant être traitée par fusion comprenant :
(a) un ou plusieurs polymères d'hydrocarbures thermoplastiques ;
(b) un adjuvant de traitement fluoropolymère contenant
(i) un polymère poly(oxyalkylène) ; et
(ii)un fluoropolymère contenant des unités interpolymérisées de fluorure de vinylidène et de perfluoropropylène, la teneur en fluorure de vinylidène du fluoropolymère étant supérieure à 85 % en poids ; et
ledit adjuvant de traitement fluoropolymère ayant un rapport polymère poly(oxyalkylène):fluoropolymère de 1:(1 ou supérieur);
et ladite composition pouvant être traitée par fusion, quand elle est extrudée, produisant un extrudat exempt de défauts de fusion avec un niveau inférieur dudit adjuvant de traitement fluoropolymère par comparaison avec un système d'adjuvant de traitement standard, le terme « adjuvant de traitement standard » signifiant les mêmes constituants, plus précisément un polymère d'hydrocarbures thermoplastique et un polymère poly(oxyalkylène), le fluoropolymère contenant 60 % en poids de fluorure de vinylidène et 40 % en poids d'hexafluoropropylène et ayant une viscosité Mooney (ML 1 + 10, 121 °C, ASTM DI646) de 36 quand des méthodes d'essai, un matériel et des conditions similaires sont utilisés.

2. Composition selon la revendication 1, la composition pouvant être traitée par fusion ayant une teneur en fluoropolymère de 400 ppm ou moins.

3. Composition selon la revendication 1 ou 2, comprenant en outre des stabilisateurs à la lumière, des antioxydants, des agents anti-adhésion, des agents de glissement, des lubrifiants, des charges, des agents ignifuges, des agents moussants, des agents de nucléation, des agents clarifiants, des colorants, des agents de pontage, des agents de compatibilisation, des agents antistatiques, des agents antibuée, des stabilisateurs à la chaleur, des plastifiants, des agents de renforcement, des agents épurateurs de métaux, des agents épurateurs d'acides/de bases, des biocides, ou des combinaisons de ceux-ci.

4. Composition selon l'une quelconque des revendications 1 à 3, dans laquelle le fluoropolymère est un polymère thermoplastique.

5. Composition pouvant être traitée par fusion comprenant :
(a) un ou plusieurs polymères d'hydrocarbures thermoplastiques ;
(b) un adjuvant de traitement fluoropolymère contenant
(i) un polymère poly(oxyalkylène) ; et
(ii)un fluoropolymère contenant des unités interpolymérisées de fluorure de vinylidène et de perfluoropropylène, la teneur en fluorure de vinylidène du fluoropolymère étant supérieure à 85 % en poids et la quantité de fluoropolymère dans la composition pouvant être traitée par fusion étant inférieure à 200 ppm ; et
ledit adjuvant de traitement fluoropolymère ayant un rapport polymère poly(oxyalkylène):fluoropolymère de 1:(1 ou supérieur).

6. Composition selon la revendication 5, comprenant en outre des stabilisateurs à la lumière, des antioxydants, des agents anti-adhésion, des agents de glissement, des lubrifiants, des charges, des agents ignifuges, des agents moussants, des agents de nucléation, des agents clarifiants, des colorants, des agents de pontage, des agents de compatibilisation, des agents antistatiques, des agents antibuée, des stabilisateurs à la chaleur, des plastifiants, des agents de renforcement, des agents épurateurs de métaux, des agents épurateurs d'acides/de bases, des biocides, ou des combinaisons de ceux-ci.

7. Composition selon la revendication 5 ou 6, dans laquelle le fluoropolymère est un polymère thermoplastique.

8. Adjuvant de traitement fluoropolymère comprenant :
(a) un polymère poly(oxyalkylène) ; et
(b) un fluoropolymère contenant des unités interpolymérisées de fluorure de vinylidène et de perfluoropropylène, la teneur en fluorure de vinylidène du fluoropolymère étant supérieure à 85 % en poids ; et ledit adjuvant de traitement fluoropolymère ayant un rapport polymère poly(oxyalkylène):fluoropolymère de 1:(1 ou supérieur);
et ledit adjuvant de traitement fluoropolymère, quand il est ajouté à une composition pouvant être traitée par fusion, produisant un extrudat exempt de défauts de fusion avec un niveau inférieur d'adjuvant de traitement fluoropolymère par comparaison avec un système d'adjuvant de traitement standard, le terme « adjuvant de traitement standard » signifiant les mêmes constituants, plus précisément un polymère d'hydrocarbures thermoplastique et un polymère poly(oxyalkylène), le fluoropolymère contenant 60 % en poids de fluorure de vinylidène et 40 % en poids d'hexafluoropropylène et ayant une viscosité Mooney (ML 1 + 10, 121 °C, ASTM DI646) de 36 quand des méthodes d'essai, un matériel et des conditions similaires sont utilisés.

9. Composition selon la revendication 8, dans laquelle le fluoropolymère est un polymère thermoplastique.
